(19) Europäisches Patentamt
European Patent Office
Office européen des brevets

(11) **EP 4 756 074 A1**

(12) **EUROPEAN PATENT APPLICATION**

(43) Date of publication:
10.06.2026 Bulletin 2026/24

(21) Application number: 25218648.1

(22) Date of filing: 26.11.2025

(51) International Patent Classification (IPC):
$C23C\ 18/16^{(2006.01)}$  $C23C\ 18/34^{(2006.01)}$
$C23C\ 18/50^{(2006.01)}$  $C25D\ 5/50^{(2006.01)}$
$C25D\ 7/00^{(2006.01)}$  $C25D\ 7/06^{(2006.01)}$

(52) Cooperative Patent Classification (CPC):
C25D 5/50; C23C 18/1653; C23C 18/1696;
C23C 18/34; C23C 18/50; C25D 7/00; C25D 7/0614

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 26.11.2024 KR 20240171333

(71) Applicant: TCC Steel Corp.
Gyeongsangbuk-do 37862 (KR)

(72) Inventors:
• KIM, Tae Geun
37834 Pohang-si (KR)

• KIM, Tae Ha
37566 Pohang-si (KR)
• SHON, Je Ha
07584 Seoul (KR)
• KIM, Yoon Han
37577 Pohang-si (KR)
• HEO, Joon Young
47571 Busan (KR)
• LEE, Yo Han
37717 Pohang-si (KR)
• KWON, Tae Woo
37655 Pohang-si (KR)

(74) Representative: Mewburn Ellis LLP
Aurora Building
Counterslip
Bristol BS1 6BX (GB)

(54) **NICKEL PLATED STEEL SHEET FOR BATTERY CASE HAVING EXCELLENT SURFACE CORROSION RESISTANCE AND METHOD FOR MANUFACTURING**

(57) The present disclosure relates to a nickel plated steel sheet for a battery case having excellent corrosion resistance and a method for manufacturing the same. In one embodiment, the nickel plated steel sheet comprises: a base steel sheet; a nickel plating layer formed on one or more surfaces of the base steel sheet; and a nickel-iron (Ni-Fe) diffusion layer formed between the base steel sheet and the nickel plating layer; wherein the nickel plating layer and the nickel-iron (Ni-Fe) diffusion layer are formed by forming an electro-nickel plating layer on the base steel sheet and an electroless nickel plating layer on at least a portion of the surface of the electro-nickel plating layer, followed by heat treatment, and the nickel plating layer includes one or more co- deposited elements selected from phosphorus (P), boron (B), tungsten (W), cobalt (Co), molybdenum (Mo), and copper (Cu) on its surface.

EP 4 756 074 A1

**Description**

CROSS-REFERENCE TO RELATED APPLICATION(S)

This application claims benefit of priority to Korean Patent Application No.10-2024-0171333, filed on November 26, 2024, in the Korean Intellectual Property Office, the disclosures of which are incorporated herein by reference in their entirety.

BACKGROUND

The present disclosure relates to a nickel plated steel sheet for a battery case having excellent corrosion resistance and a method for manufacturing the same. More specifically, the present disclosure relates to a nickel plated steel sheet for a battery case having excellent corrosion resistance and a method for manufacturing the same, by continuously applying electroplating and electroless plating.

Recently, the battery market has been growing rapidly due to the increased utilization of renewable energy and the accelerating transition to electric vehicles in the automotive industry. Among them, cylindrical lithium-ion batteries, which are rechargeable, are applied to various industries based on standardized sizes, and thus their fields of utilization are significantly expanding. In addition, cylindrical lithium-ion batteries are quickly increasing their market share based on the advantages of having a low production cost due to fewer process steps and being advantageous for mass production.

Meanwhile, a nickel plated steel sheet manufactured through an electroplating process is used for the battery case of conventional cylindrical lithium-ion batteries. However, electro-nickel plated steel sheets have numerous plating defects called pinholes where iron is locally exposed on the plated surface, which subsequently acts as a factor that reduces the corrosion resistance in terms of battery quality.

Conventional nickel plated steel sheets used a method to increase corrosion resistance by forming a nickel plating layer through electroplating, followed by a heat treatment process to alloy the interface, in order to solve these quality degradation problems. This method can relatively increase corrosion resistance through a change in the composition of the pinholes, but it has a limit in increasing corrosion resistance because it does not prevent the external exposure of the iron itself. On the other hand, the corrosion resistance of the battery case is a critical quality factor directly related to the lifespan and stability of the battery, demanding the development of a nickel plated steel sheet with even better corrosion resistance.

The background art related to the present disclosure is disclosed in Japanese Registered Patent Publication No. 4698205 (published on June 8, 2011, Title of the Disclosure: Steel sheet for battery case, surface-treated steel sheet for battery case, battery case, and battery).

SUMMARY

One objective of the present disclosure is to provide a nickel plated steel sheet for a battery case which has excellent corrosion resistance to maximize battery life from the external environment, by continuously applying an electroplating process and an electroless plating process with excellent deposition properties and high reactivity with the iron surface for a short period of time, thereby solving plating defects such as pinholes formed during the electroplating process through selective plating.

Another objective of the present disclosure is to provide a nickel plated steel sheet for a battery case that has excellent corrosion resistance even with a thin plating layer thickness by continuously applying the electroless plating process, and which has excellent adhesion of the nickel plating layer.

Still another objective of the present disclosure is to provide a nickel plated steel sheet for a battery case which has low surface contact resistance, excellent surface conductivity, and an excellent effect in removing defects on the surface of the nickel plating layer.

Yet another objective of the present disclosure is to provide a method for manufacturing the nickel plated steel sheet for a battery case.

One aspect of the present disclosure relates to a nickel plated steel sheet for a battery case. In one embodiment, the nickel plated steel sheet for a battery case comprises: a base steel sheet; a nickel plating layer formed on one or more surfaces of the base steel sheet; and a nickel-iron (Ni-Fe) diffusion layer formed between the base steel sheet and the nickel plating layer; wherein the nickel plating layer and the nickel-iron (Ni-Fe) diffusion layer are formed by forming an electro-nickel plating layer on the base steel sheet and an electroless nickel plating layer on at least a portion of the surface of the electro-nickel plating layer, followed by heat treatment, and the nickel plating layer includes one or more co-deposited elements selected from phosphorus (P), boron (B), tungsten (W), cobalt (Co), molybdenum (Mo), and copper (Cu) on its surface.

In one embodiment, the nickel plating layer may contain 1 to 20 wt% of the co-deposited element on its surface.

In one embodiment, the nickel plating layer may have a surface contact resistance of 1.0 mΩ or less, and the nickel plated steel sheet may satisfy the condition of Formula 1.

【Formula 1】

$$|(R_1-R_0)/R_0 \ X \ 100| \ \leq \ 10$$

(In Formula 1, $R_0$ is the surface contact resistance (mΩ) of the nickel plating layer heat-treated without forming an electroless nickel plating layer, and $R_1$ is the surface contact resistance (mΩ) of the nickel plating layer formed by forming the electro-nickel plating layer and the electroless nickel plating layer, followed by heat treatment).

In one embodiment, the electroless nickel plating layer may be formed by filling defect areas formed on the electro-nickel plating layer.

In one embodiment, the thickness of the electro-nickel plating layer may be 0.5 to 6.0 μm, and the thickness of the electroless nickel plating layer, based on the upper surface of the electro-nickel plating layer, may be 0 to 0.5 μm.

Another aspect of the present disclosure relates to the method for manufacturing the nickel plated steel sheet. In one embodiment, the method for manufacturing the nickel plated steel sheet comprises: forming an electro-nickel plating layer on one or more surfaces of a base steel sheet (S10); forming an electroless nickel plating layer on at least a portion of the surface of the electro-nickel plating layer to produce an intermediate (S20); and heat-treating the intermediate to form a nickel-iron (Ni-Fe) diffusion layer between the base steel sheet and the electro-nickel plating layer (S30); wherein the nickel plated steel sheet includes a base steel sheet, a nickel plating layer formed on one or more surfaces of the base steel sheet, and a nickel-iron (Ni-Fe) diffusion layer formed between the base steel sheet and the nickel plating layer, the nickel plating layer and the nickel-iron (Ni-Fe) diffusion layer are formed by heat-treating the intermediate, and the nickel plating layer includes one or more co-deposited elements selected from phosphorus (P), boron (B), tungsten (W), cobalt (Co), molybdenum (Mo), and copper (Cu) on its surface.

In one embodiment, the electroless nickel plating layer may be formed by electroless plating using an electroless nickel plating solution containing 0.05 to 1.0 mol/L of a nickel salt, 0.2 to 10.0 mol/L of a reducing agent, and 0.05 to 1.0 mol/L of a complexing agent, and the complexing agent may include one or more selected from citric acid, succinic acid, formic acid, malic acid, and tartaric acid.

In one embodiment, the heat treatment may be performed at 650 to 730 °C in an atmosphere gas including nitrogen ($N_2$) and hydrogen ($H_2$), and the manufactured nickel plated steel sheet may satisfy the condition of Formula 2.

【Formula 2】

$$|(R_1-R_2)/R_2 \ X \ 100| \ \leq \ 10$$

(In Formula 2, $R_1$ is the surface contact resistance (mΩ) of the nickel plating layer formed by forming the electro-nickel plating layer and the electroless nickel plating layer, followed by heat treatment, and $R_2$ is the surface contact resistance (mΩ) of the electroless nickel plating layer of the intermediate before heat treatment).

Applying the nickel plated steel sheet for a battery case and the manufacturing method of the present disclosure allows the continuous application of an electroplating process and an electroless plating process with excellent deposition properties and high reactivity with the iron surface for a short period of time, thereby solving plating defects such as pinholes formed during the electroplating process through selective plating, leading to excellent corrosion resistance that maximizes battery life from the external environment. Furthermore, the continuous application of the electroless plating process ensures excellent corrosion resistance even with a thin plating layer thickness, resulting in excellent price competitiveness and economic feasibility, excellent adhesion of the nickel plating layer, low surface contact resistance, excellent surface conductivity, and an excellent surface defect removal effect.

The high-corrosion-resistance nickel plated steel sheet of the present disclosure is characterized by including a base steel sheet; and an iron-nickel alloy layer, an electro-nickel plating layer, and an electroless nickel plating layer on at least one surface of the base steel sheet.

The present disclosure employs a method of continuously applying electroless plating with excellent surface deposition properties after the electroplating process, thereby effectively removing plating defects such as pinholes that occur during the electroplating manufacturing process without increasing surface resistance. The high-corrosion-resistance nickel plated steel sheet can secure high corrosion resistance even with a relatively thin plating layer thickness, securing price competitiveness.

The present disclosure provides an electroless plating process that can effectively remove only the pinhole areas to prevent the surface contact resistance of the battery case from increasing due to the electroless nickel plating layer.

BRIEF DESCRIPTION OF THE DRAWINGS

FIG. 1 illustrates a nickel plated steel sheet according to one embodiment of the present disclosure;
FIG. 2 illustrates an intermediate according to one embodiment of the present disclosure;
FIG. 3 illustrates an intermediate according to another embodiment of the present disclosure;
FIG. 4 is a graph illustrating the results of surface co-deposited element analysis (GDS) for nickel plated steel sheets of Examples and Comparative Examples; and
FIG. 5 is a photograph illustrating the results of the corrosion resistance test for Examples and Comparative Examples.

DETAILED DESCRIPTION OF EXEMPLARY EMBODIMENTS

In describing the present disclosure, if it is determined that a detailed description of related known technology or configuration may unnecessarily obscure the gist of the present disclosure, the detailed description thereof will be omitted.

Furthermore, the terms used hereinafter are defined in consideration of their functions in the present disclosure, and as they may vary according to the user's or operator's intention or convention, their definition should be based on the overall content described in this specification.

[Nickel Plated Steel Sheet for Battery Case]

One aspect of the present disclosure relates to a nickel plated steel sheet (or nickel plated heat-treated steel sheet) for a battery case.

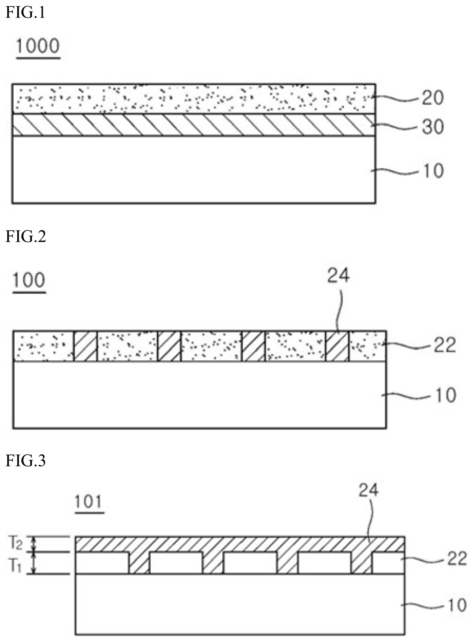

FIG. 1 illustrates a nickel plated steel sheet according to one embodiment of the present disclosure. Referring to FIG. 1, the nickel plated steel sheet 1000 comprises: a base steel sheet 10; a nickel plating layer 20 formed on one or more surfaces of the base steel sheet 10; and a nickel-iron (Ni-Fe) diffusion layer 30 formed between the base steel sheet 10 and the nickel plating layer 20.

The nickel plating layer and the nickel-iron (Ni-Fe) diffusion layer may be formed by heat-treating an intermediate manufactured by forming an electro-nickel plating layer on the base steel sheet and an electroless nickel plating layer on at least a portion of the surface of the electro-nickel plating layer.

FIG. 2 illustrates an intermediate according to one embodiment of the present disclosure, and FIG. 3 illustrates an intermediate according to another embodiment of the present disclosure. Referring to FIGS. 1 to 3, the nickel plating layer 20 and the nickel-iron (Ni-Fe) diffusion layer 30 are formed by heat-treating an intermediate 100 and 101, which is formed by forming an electro-nickel plating layer 22 on the base steel sheet 10 and an electroless nickel plating layer 24 on at least a portion of the surface of the electro-nickel plating layer 22, and the nickel plating layer 20 includes one or more co-deposited elements selected from phosphorus (P), boron (B), tungsten (W), cobalt (Co), molybdenum (Mo), and copper (Cu) on its surface.

[Base Steel Sheet]

The base steel sheet 10 may be a steel sheet typically used for metal plating. In one embodiment, the base steel sheet may include carbon (C), silicon (Si), manganese (Mn), phosphorus (P), and iron (Fe).

For example, the base steel sheet may include 0.005 wt% to 0.1 wt% of carbon (C), greater than 0 wt% to 0.05 wt% or less of silicon (Si), 0.1 wt% to 0.6 wt% of manganese (Mn), greater than 0 wt% to 0.01 wt% or less of phosphorus (P), and the balance of iron (Fe) and other unavoidable impurities, based on the total weight. Including these components and contents may result in excellent stiffness and mechanical properties of the base steel sheet.

The carbon (C) may be included in an amount of 0.005 wt% to 0.1 wt% based on the total weight of the base steel sheet. Inclusion within this range may result in excellent mechanical properties such as strength. For example, the carbon may be included in an amount of 0.01 wt% to 0.06 wt%.

The silicon (Si) may be included in an amount of greater than 0 wt% to 0.05 wt% or less based on the total weight of the base steel sheet. Inclusion within this range may result in excellent ductility and workability of the base steel sheet. For example, the silicon may be included in an amount of greater than 0 wt% to 0.02 wt% or less.

The manganese (Mn) may be included in an amount of 0.1 wt% to 0.6 wt% based on the total weight of the base steel sheet. Inclusion within this range may result in excellent mechanical properties such as the strength of the base steel sheet. For example, the manganese may be included in an amount of 0.2 wt% to 0.5 wt%.

The phosphorus (P) may be included in an amount of greater than 0 wt% to 0.01 wt% or less based on the total weight of the base steel sheet. Inclusion within this range may result in excellent mechanical strength while preventing defects such as the occurrence of segregation in the base steel sheet.

In another example, the base steel sheet may be a material for tin plating (BP: Black plate), cold rolled steel (CR), or full hard material that has not undergone an annealing process after cold rolling during the cold rolled steel sheet manufacturing process.

When BP or CR cold rolled steel sheets are used as the base steel sheet, the main purpose of the alloying heat treatment process after nickel plating the base steel sheet is the alloying heat treatment of the nickel plating layer and the iron of the base steel sheet. If a full hard material that has not undergone an annealing process after cold rolling is used as the base steel sheet, the annealing of the base steel sheet and the alloying of the nickel plating layer and the iron of the base steel sheet can occur simultaneously during the alloying heat treatment after nickel plating the base steel sheet.

[Nickel Plating Layer]

The nickel plating layer may be included to ensure the corrosion resistance and conductivity of the present disclosure. In one embodiment, a nickel-iron diffusion layer is formed on at least one surface of the base steel sheet, and a nickel plating layer is formed on the upper surface of the nickel-iron diffusion layer.

Referring to FIGS. 1 and 2, the nickel plating layer 20 and the nickel-iron (Ni-Fe) diffusion layer 30 may be formed by heat-treating the electro-nickel plating layer 22 formed on the base steel sheet 10 and the electroless nickel plating layer 24 formed on at least a portion of the surface of the electro-nickel plating layer 22.

In one embodiment, the electroless nickel plating layer may be formed by filling defect areas such as pinholes and cracks formed on the electro-nickel plating layer. Referring to FIG. 2, the electroless nickel plating layer 24 may be formed by filling the defect areas formed on the electro-nickel plating layer 22. Under these conditions, defects such as pinholes formed due to electroplating are easily removed without increasing surface resistance, and the corrosion resistance is excellent even with a thin nickel plating layer thickness, which results in excellent price competitiveness.

For example, as shown in FIG. 2, the electroless nickel plating layer 24 may be formed by filling only the defect areas formed in the electro-nickel plating layer 22.

In another embodiment, as shown in FIG. 3, the electroless nickel plating layer 24 may be formed on the electro-nickel plating layer 22 while filling the defect areas formed on the electro-nickel plating layer 22. Under these conditions, defects such as pinholes formed due to electroplating are easily removed without increasing surface resistance, and the corrosion resistance is excellent even with a thin nickel plating layer thickness, which results in excellent price competitiveness.

In one embodiment, the thickness of the electro-nickel plating layer may be 0.5 to 6.0 $\mu$m. Under this condition, excellent corrosion resistance and conductivity may be achieved. For example, the thickness of the electro-nickel plating layer may be 0.5 to 4.0 $\mu$m, 0.5 to 3.0 $\mu$m, 0.8 to 2.0 $\mu$m, or 0.8 to 1.5 $\mu$m.

In one embodiment, the thickness of the electroless nickel plating layer, based on the upper surface of the electro-nickel plating layer, may be 0 to 0.5 $\mu$m. Under this condition, excellent corrosion resistance and conductivity are achieved, and excellent corrosion resistance is maintained even with a thin nickel plating layer thickness, resulting in excellent price competitiveness. For example, the thickness of the electroless nickel plating layer may be 0 to 0.4 $\mu$m, 0 to 0.3 $\mu$m, or 0 to 0.2 $\mu$m.

For example, the thickness of the electroless nickel plating layer may be excluding the thickness of the electroless nickel plating layer filled in the defects formed in the electro-nickel plating layer.

Referring to FIG. 2, the thickness $T_1$ of the electro-nickel plating layer 22 of the intermediate 101, based on the uppermost part of the base steel sheet 10, may be 0.5 to 6.0 $\mu$m, and the thickness $T_2$ of the electroless nickel plating layer 24, based on the uppermost part of the electro-nickel plating layer 22, may be 0 to 0.5 $\mu$m.

In one embodiment, the nickel plating layer includes a co-deposited element on its surface. In one embodiment, the co-deposited element includes one or more selected from phosphorus (P), boron (B), tungsten (W), cobalt (Co), molybdenum (Mo), and copper (Cu). Including the co-deposited element results in excellent corrosion resistance of the nickel plated steel sheet and excellent conductivity by minimizing surface contact resistance. If the co-deposited element is not included, the corrosion resistance and durability of the nickel plated steel sheet may decrease, or the conductivity may decrease due to increased surface contact resistance. For example, the co-deposited element may include phosphorus (P).

The nickel plating layer may contain 1 to 20 wt% of the co-deposited element on its surface. Including the co-deposited element within this content range ensures excellent durability and corrosion resistance of the nickel plated steel sheet while preventing resistance increase, leading to excellent conductivity. For example, the nickel plating layer may contain 1 to 18 wt%, 3 to 15 wt%, 5 to 12 wt%, or 5 to 10 wt% of the co-deposited element on its surface.

In one embodiment, the nickel plating layer may have a surface contact resistance of 1.0 m$\Omega$ or less. For example, the surface contact resistance of the nickel plated steel sheet may be measured using an AC four-point probe method under the condition of a measurement current of 10 mA using a surface contact resistance tester (Manufacturer: A.I.T Inc., Product Name: CMT-SR2000N). Under this surface contact resistance condition, the self-discharge of the nickel plated steel sheet under no-load conditions is reduced, preventing a reduction in lifespan and resulting in excellent long-life characteristics. For example, the surface resistance of the nickel plated steel sheet may be 0.2 to 0.8 m$\Omega$ or 0.5 to 0.8 m$\Omega$.

In one embodiment, the nickel plated steel sheet may satisfy the condition of Formula 1.

$$【Formula 1】$$

$$|(R_1-R_0)/R_0 \times 100| \leq 10$$

(In Formula 1, $R_0$ is the surface contact resistance (m$\Omega$) of the nickel plating layer heat-treated without forming an electroless nickel plating layer, and $R_1$ is the surface contact resistance (m$\Omega$) of the nickel plating layer formed by forming the electro-nickel plating layer and the electroless nickel plating layer, followed by heat treatment).

Satisfying the condition of Formula 1 ensures excellent corrosion resistance of the nickel plated steel sheet, minimizes surface resistance, and provides excellent conductivity. For example, the nickel plated steel sheet may satisfy Formula 1 with a value of 8 or less or 6 or less.

[Nickel-Iron Diffusion Layer]

The nickel-iron diffusion layer 30 is formed between the base steel sheet and the nickel plating layer of the nickel plated steel sheet. The nickel-iron diffusion layer may be formed by forming an electro-nickel plating layer on the base steel sheet, forming an electroless nickel plating layer on at least a portion of the surface of the electro-nickel plating layer, and then performing diffusion heat treatment.

In one embodiment, the nickel-iron diffusion layer may contain 0.3 to 25 wt% of nickel (Ni). In one embodiment, the nickel content in the nickel-iron diffusion layer may be measured using Energy Dispersive Spectrometer (EDS) or Electron Probe X-ray Microanalysis (EPMA) after removing the nickel layer of the nickel plated steel sheet.

Satisfying the nickel content condition of the nickel-iron diffusion layer ensures excellent corrosion resistance of the nickel plated steel sheet, provides surface contact resistance, and provides excellent conductivity. For example, the nickel-iron diffusion layer may contain a nickel content of 0.5 to 25 wt% or 1 to 24 wt%.

[Method for Manufacturing Nickel Plated Steel Sheet]

Another aspect of the present disclosure relates to the method for manufacturing the nickel plated steel sheet (or nickel plated heat-treated steel sheet). In one embodiment, the method for manufacturing the nickel plated steel sheet includes (S10) Electro-nickel plating step; (S20) Electroless nickel plating step; and (S30) Heat treatment step. More specifically, the method for manufacturing the nickel plated steel sheet includes: (S10) forming an electro-nickel plating layer on one or more surfaces of a base steel sheet; (S20) forming an electroless nickel plating layer on at least a portion of the surface of the electro-nickel plating layer to manufacture an intermediate; and (S30) heat-treating the intermediate to sequentially form a nickel-iron (Ni-Fe) diffusion layer and a nickel plating layer on the base steel sheet.

[(S10) Electro-nickel Plating Step]

This step is the step of forming an electro-nickel plating layer on one or more surfaces of a base steel sheet.

In one embodiment, the method may further include a pre-treating the base steel sheet before performing the electro-nickel plating. The pre-treatment may include alkaline degreasing, alkaline electrolytic degreasing, and pickling. The pickling may be performed using an acidic aqueous solution such as hydrochloric acid, nitric acid, and sulfuric acid. Pre-treatment as described above can remove rust that may form on the surface of the base steel sheet and activate the surface.

In one embodiment, the electro-nickel plating layer may be formed by electro-nickel plating using an electro-nickel plating solution containing nickel sulfate ($NiSO_4$), nickel chloride ($NiCl_2$), and boric acid ($H_3BO_3$).

In one embodiment, the electro-nickel plating solution may contain 150 to 300 g/L of nickel sulfate ($NiSO_4$), 20 to 100 g/L of nickel chloride ($NiCl_2$), 20 to 100 g/L of boric acid ($H_3BO_3$), and the balance of water.

In one embodiment, the electro-nickel plating solution may contain 0.5 to 1.15 mol/L of nickel sulfate, 0.05 to 1.3 mol/L of nickel chloride, 0.3 to 1.65 mol/L of boric acid, and the balance of water.

The nickel sulfate may be included in the electro-nickel plating solution at a concentration of 150 to 300 g/L. Inclusion at this concentration provides excellent nickel ion supply effect and excellent adhesion and plating quality of the electro-nickel plating layer. For example, the nickel sulfate may be included in the electro-nickel plating solution at a concentration of 220 to 280 g/L.

The nickel chloride may be included in the electro-nickel plating solution at a concentration of 20 to 100 g/L.

Inclusion at this concentration provides excellent electrical conductivity and plating efficiency, resulting in excellent adhesion between the electro-nickel plating layer and the electroless nickel plating layer. For example, the nickel chloride may be included in the electro-nickel plating solution at a concentration of 30 to 70 g/L.

The boric acid may be included in the electro-nickel plating solution at a concentration of 20 to 100 g/L. Inclusion at this concentration minimizes the pH change of the electro-nickel plating solution, resulting in excellent nickel plating efficiency and plating quality. For example, the boric acid may be included in the electro-nickel plating solution at a concentration of 30 to 70 g/L.

In one embodiment, the pH of the electro-nickel plating solution may be 3.2 to 4.5. Under this condition, the adhesion of the electro-nickel plating layer is excellent, the plating layer thickness is uniform, and the plating quality is excellent.

In one embodiment, the electro-nickel plating may be performed under the conditions of a temperature of 40 to 70 °C and a current density of 3 to 30 A/dm$^2$. Under this condition, excellent electrical conductivity and plating efficiency are achieved, the plating layer thickness is uniform, and the adhesion and plating quality of the electro-nickel plating layer are excellent. For example, the electro-nickel plating may be performed under the conditions of a temperature of 55 to 65 °C and a current density of 8 to 15 A/dm$^2$.

[(S20) Electroless Nickel Plating Step]

This step is the step of forming an electroless nickel plating layer on at least a portion of the surface of the electro-nickel plating layer to manufacture an intermediate.

In one embodiment, the electroless nickel plating layer may be formed by electroless plating using an electroless nickel plating solution containing 0.05 to 1.0 mol/L of a nickel salt, 0.2 to 10.0 mol/L of a reducing agent, and 0.05 to 1.0 mol/L of a complexing agent.

In one embodiment, the electroless nickel plating may be formed by contacting the electro-nickel plating layer formed on the base steel sheet with the electroless nickel plating solution. In one embodiment, the electroless nickel plating may be formed by immersing the base steel sheet with the electro-nickel plating layer formed thereon in the electroless nickel plating solution.

The nickel salt may include a component that generates nickel ions in the electroless nickel plating solution during the electroless plating. For example, the nickel salt may include one or more selected from nickel sulfate, nickel chloride, and nickel ammonium sulfate ($(NH_4)_2Ni(SO_4)_2$).

In one embodiment, the nickel salt may be included in the electroless nickel plating solution at a concentration of 0.05 to 1.0 mol/L. Inclusion within this concentration range provides excellent plating efficiency, excellent adhesion between the electro-nickel plating layer and the electroless nickel plating layer, prevents plating defects, and results in excellent plating quality.

The reducing agent may be included to form the electroless nickel plating layer on at least a portion of the surface of the electro-nickel plating layer and to control the speed of the electroless plating reaction.

In one embodiment, the electroless nickel plating solution may further include an additive compound. For example, the additive compound may include one or more selected from a tungsten (W) compound, a molybdenum (Mo) compound, a cobalt (Co) compound, and a copper (Cu) compound. For example, the additive compound may be included in the electroless nickel plating solution at a concentration of 0.01 to 1.0 mol/L.

In one embodiment, the reducing agent may include one or more selected from a boron-based reducing agent, an aldehyde-based reducing agent, a hydrazine-based reducing agent, a hypophosphite-based reducing agent, and a sulfonic acid-based reducing agent. Under this condition, the electroless nickel plating layer is formed, and the speed of the electroless plating reaction can be easily controlled.

In one embodiment, the reducing agent may include one or more selected from an aldehyde compound, a hydrazine compound, a hypophosphite-based compound, a sulfonic acid-based compound, their hydrate forms, and their salt forms.

In one embodiment, the reducing agent may be included in the electroless nickel plating solution at a concentration of 0.2 to 10.0 mol/L. Inclusion within this concentration range provides excellent plating efficiency, excellent adhesion between the electro-nickel plating layer and the electroless nickel plating layer, prevents plating defects, and results in excellent plating quality.

The complexing agent may be included to control the reaction speed of the electroless nickel plating, prevent unreacted components, ensure the stability and homogeneity of the electroless nickel plating solution, and improve plating quality.

In one embodiment, the complexing agent may include one or more selected from citric acid, succinic acid, formic acid, malic acid, and tartaric acid.

In one embodiment, the complexing agent may be included in the electroless nickel plating solution at a concentration of 0.05 to 1.0 mol/L. Inclusion within this range ensures the stability and homogeneity of the electroless nickel plating solution and improves plating quality.

In one embodiment, the electroless nickel plating solution may further include a pH adjuster. The pH adjuster may include a base. For example, the base may include ammonia water ($NH_4OH$). Under this condition, the pH of the electroless nickel plating solution can be easily adjusted, resulting in excellent electroless nickel plating reactivity.

In one embodiment, the pH of the electroless nickel plating solution may be 6.0 to 6.5. Under this condition, the adhesion between the electro-nickel plating layer and the electroless nickel plating layer is excellent, the plating quality is excellent, and the corrosion resistance is excellent.

In one embodiment, the temperature of the electroless nickel plating solution may be 50 to 75 °C. Under this condition, the control of the electroless nickel plating reaction speed is easy, the adhesion between the electro-nickel plating layer and the electroless nickel plating layer is excellent, plating defects are prevented, and the plating quality is excellent. For example, the temperature of the electroless nickel plating solution may be 60 to 65 °C.

In one embodiment, the reaction time for the electroless nickel plating may be greater than 0 seconds and 60 seconds or less. Under this reaction time condition, defect areas such as pinholes formed during the electro-nickel plating layer formation process may be selectively filled with the electroless nickel plating layer, and defects such as pinholes may be easily removed without increasing surface resistance, the corrosion resistance is improved, excellent corrosion resistance is achieved even with a thin nickel plating layer thickness, resulting in excellent long-life properties and price competitiveness. For example, the contact between the electro-nickel plating layer formed on the base steel sheet and the electroless nickel plating solution may be for greater than 0 seconds and 60 seconds or less, 1 to 30 seconds, 5 to 30 seconds, 5 to 20 seconds, or 5 to 15 seconds.

In one embodiment, the electroless nickel plating layer may be formed by filling defect areas such as pinholes and cracks formed on the electro-nickel plating layer. Referring to FIG. 2, the electroless nickel plating layer 24 may be formed by filling the defect areas formed on the electro-nickel plating layer 22. Under these conditions, defects such as pinholes formed due to electroplating are easily removed without increasing surface resistance, and excellent corrosion resistance is maintained even with a thin nickel plating layer thickness, which results in excellent price competitiveness.

For example, as shown in FIG. 2, the electroless nickel plating layer 24 may be formed by filling only the defect areas formed in the electro-nickel plating layer 22.

In another embodiment, as shown in FIG. 3, the electroless nickel plating layer 24 may be formed on the electro-nickel plating layer 22 while filling the defect areas formed on the electro-nickel plating layer 22. Under these conditions, defects such as pinholes formed due to electroplating are easily removed without increasing surface resistance, and excellent corrosion resistance is maintained even with a thin nickel plating layer thickness, which results in excellent price competitiveness.

[(S30) Heat Treatment Step]

This step is the step of heat-treating the intermediate (or base steel sheet, electro-nickel plating layer, and electroless nickel plating layer) to sequentially form a nickel-iron (Ni-Fe) diffusion layer and a nickel plating layer on the base steel sheet of the intermediate.

Through the heat treatment process, a diffusion layer containing nickel-iron (Fe) and a nickel plating layer are sequentially formed on the base steel sheet, and the nickel plating layer and the nickel-iron (Ni-Fe) diffusion layer are softened, resulting in excellent workability and excellent corrosion resistance and conductivity of the nickel plated steel sheet.

In one embodiment, the heat treatment may be performed at 650 to 730 °C. Performing the heat treatment under this condition may result in excellent corrosion resistance and conductivity of the nickel plated steel sheet. In addition, heat treatment under this condition minimizes equipment wear in subsequent processes such as temper rolling, slitting, and battery case forming after the nickel-iron heat treatment, thereby reducing the frequency of equipment replacement and ultimately achieving improved productivity, reduced production costs, and quality improvement.

In one embodiment, the heat treatment may be performed for within 10 minutes. Performing the heat treatment under this condition may result in excellent corrosion resistance and conductivity of the nickel plated steel sheet. For example, the heat treatment may be performed for greater than 0 seconds and within 10 minutes.

In one embodiment, the atmosphere gas used during the heat treatment may include nitrogen ($N_2$) and hydrogen ($H_2$). Performing the heat treatment under this atmosphere gas condition minimizes the formation of an oxide film on the surface of the nickel plated steel sheet, thereby minimizing the increase in surface contact resistance and resulting in excellent conductivity.

In one embodiment, the atmosphere gas may include 70 vol% or more and less than 100 vol% of nitrogen and greater than 0 vol% and 30 vol% or less of hydrogen, based on the total volume of nitrogen ($N_2$) and hydrogen ($H_2$). Performing the heat treatment under this atmosphere gas condition minimizes the formation of an oxide film on the surface of the nickel plated steel sheet, thereby minimizing the increase in surface contact resistance and resulting in excellent conductivity. For example, the atmosphere gas may include 80 to 97 vol% of nitrogen and 3 to 20 vol% of hydrogen, based on the total volume of nitrogen ($N_2$) and hydrogen ($H_2$).

In one embodiment, the atmosphere gas during the heat treatment may further include oxygen ($O_2$). The oxygen concentration may be 1.0 to 500 ppm based on the total volume of the atmosphere gas during the heat treatment. Performing the heat treatment under this atmosphere gas condition minimizes the formation of an oxide film on the surface of the nickel plated steel sheet, thereby minimizing the increase in surface contact resistance and resulting in excellent conductivity. For example, the oxygen may be included in an amount of 5.0 to 100 ppm.

In one embodiment, the heat treatment may be performed at 650 to 730 °C in an atmosphere gas including nitrogen ($N_2$) and hydrogen ($H_2$), and the manufactured nickel plated steel sheet may satisfy the condition of Formula 2.

【Formula 2】

$$|(R_1-R_2)/R_2 \times 100| \leq 10$$

(In Formula 2, $R_1$ is the surface contact resistance ($m\Omega$) of the nickel plating layer formed by forming the electro-nickel plating layer and the electroless nickel plating layer, followed by heat treatment, and $R_2$ is the surface contact resistance ($m\Omega$) of the electroless nickel plating layer of the intermediate before heat treatment).

Satisfying the condition of Formula 2 minimizes the change in surface resistance of the nickel plated steel sheet and provides excellent conductivity. For example, the nickel plated steel sheet manufactured by the heat treatment may satisfy Formula 2 with a value of 8 or less or 6 or less.

In one embodiment, the heat treatment may include the steps of heating the intermediate to 650 to 730 °C and maintaining the heated temperature for greater than 0 minutes and 10 minutes or less in an atmosphere gas including nitrogen ($N_2$), hydrogen ($H_2$), and oxygen ($O_2$).

In one embodiment, the method for manufacturing the plated steel sheet may further include (S40) the step of temper rolling the base steel sheet with the nickel-iron diffusion layer formed thereon to manufacture a rolled material, after the heat treatment step (S30).

[(S40) Temper Rolling Step]

This step is the step of manufacturing a temper-rolled material (or nickel plated steel sheet) by temper rolling (skin pass rolling) the base steel sheet with the nickel-iron diffusion layer formed thereon. The temper rolling may be performed to control the thickness, shape, and surface roughness of the steel sheet, minimize the residual stress of the nickel plated steel sheet, and ensure uniform material properties.

The rolling may be performed by feeding the base steel sheet with the nickel-iron diffusion layer formed thereon into a rolling mill and performing temper rolling using the upper and lower work rolls of the rolling mill.

In one embodiment, the temper rolling may be performed under the condition of a reduction rate of 0.3 to 2.0% per pass. Performing temper rolling under this condition minimizes the residual stress of the steel sheet and ensures uniform material properties. For example, the temper rolling may be performed under the condition of a reduction rate of 0.8 to 1.5% per pass.

In one embodiment, the method for manufacturing the nickel plated steel sheet may further include (S50) the step of slitting the temper-rolled material to manufacture a steel sheet strip, after the temper rolling step (S40).

[(S50) Slitting Step]

This step is the step of manufacturing a steel sheet strip by slitting the temper-rolled material. The slitting may be performed by using a slitting blade in the rolling direction of the product to slit the wide width into a narrow width according to the customer's requirements after the temper rolling process.

In one embodiment, the method may further include a step of forming the processed strip into a case shape after the slitting step. For example, it may be formed into a case shape by press forming.

The nickel plated steel sheet includes a base steel sheet, a nickel plating layer formed on one or more surfaces of the base steel sheet, and a nickel-iron (Ni-Fe) diffusion layer formed between the base steel sheet and the nickel plating layer. The nickel plating layer and the nickel-iron (Ni-Fe) diffusion layer are formed by heat-treating the intermediate, and the nickel plating layer includes one or more co-deposited elements selected from phosphorus (P), boron (B), tungsten (W), cobalt (Co), molybdenum (Mo), and copper (Cu) on its surface.

In one embodiment, the thickness of the electro-nickel plating layer may be 0.5 to 6.0 $\mu$m. Under this condition, excellent corrosion resistance and conductivity may be achieved. For example, the thickness of the electro-nickel plating layer may be 0.5 to 4.0 $\mu$m, 0.5 to 3.0 $\mu$m, 0.8 to 2.0 $\mu$m, or 0.8 to 1.5 $\mu$m.

In one embodiment, the thickness of the electroless nickel plating layer, based on the upper surface of the electro-nickel plating layer, may be 0 to 0.5 $\mu$m. Under this condition, excellent corrosion resistance and conductivity are achieved, and excellent corrosion resistance is maintained even with a thin nickel plating layer thickness, resulting in excellent price competitiveness. For example, the thickness of the electroless nickel plating layer may be 0 to 0.4 $\mu$m, 0 to 0.3 $\mu$m, or 0 to 0.2 $\mu$m.

For example, the thickness of the electroless nickel plating layer may be excluding the thickness of the electroless nickel plating layer filled in the defects formed in the electro-nickel plating layer.

Referring to FIG. 3, the thickness $T_1$ of the electro-nickel plating layer 22, based on the uppermost part of the base steel sheet 10, may be 0.5 to 6.0 $\mu$m, and the thickness $T_2$ of the electroless nickel plating layer 24, based on the uppermost part of the electro-nickel plating layer 22, may be 0 to 0.5 $\mu$m.

In one embodiment, the nickel plating layer includes a co-deposited element on its surface. In one embodiment, the co-deposited element includes one or more selected from phosphorus (P), boron (B), tungsten (W), cobalt (Co), molybdenum (Mo), and copper (Cu). Including the co-deposited element results in excellent corrosion resistance of the nickel plated steel sheet and excellent conductivity by minimizing surface contact resistance. If the co-deposited element is not included, the corrosion resistance and durability of the nickel plated steel sheet may decrease, or the conductivity may decrease due to increased surface contact resistance. For example, the co-deposited element may include phosphorus (P).

The nickel plating layer may contain 1 to 20 wt% of the co-deposited element on its surface. Including the co-deposited element within this content range ensures excellent durability and corrosion resistance of the nickel plated steel sheet while preventing resistance increase, leading to excellent conductivity. For example, the nickel plating layer may contain 1 to 18 wt%, 3 to 15 wt%, 5 to 12 wt%, or 5 to 10 wt% of the co-deposited element on its surface.

In one embodiment, the nickel plating layer may have a surface contact resistance of 1.0 m$\Omega$ or less. For example, the surface contact resistance of the nickel plated steel sheet may be measured using an AC four-point probe method under the condition of a measurement current of 10 mA using a surface contact resistance tester (Manufacturer: A.I.T Inc., Product Name: CMT-SR2000N). Under this surface contact resistance condition, the self-discharge of the nickel plated steel sheet under no-load conditions is reduced, preventing a reduction in lifespan and resulting in excellent long-life characteristics. For example, the surface resistance of the nickel plated steel sheet may be 0.2 to 0.8 m$\Omega$ or 0.5 to 0.8 m$\Omega$.

In one embodiment, the nickel plated steel sheet may satisfy the condition of Formula 1.

【Formula 1】

$$|(R_1-R_0)/R_0 \times 100| \leq 10$$

(In Formula 1, $R_0$ is the surface contact resistance (m$\Omega$) of the nickel plating layer heat-treated without forming an electroless nickel plating layer, and $R_1$ is the surface contact resistance (m$\Omega$) of the nickel plating layer formed by forming the electro-nickel plating layer and the electroless nickel plating layer, followed by heat treatment).

Satisfying the condition of Formula 1 ensures excellent corrosion resistance of the nickel plated steel sheet, minimizes surface resistance, and provides excellent conductivity. For example, the nickel plated steel sheet may satisfy Formula 1 with a value of 8 or less or 6 or less.

The nickel plated steel sheet manufactured by the method for manufacturing the nickel plated steel sheet has excellent surface corrosion resistance and conductivity, and provides excellent corrosion resistance even with a thin plating thickness, resulting in excellent price competitiveness.

Hereinafter, the configuration and operation of the present disclosure will be described in more detail through preferred embodiments. However, these are presented as preferred examples of the present disclosure and should not be construed as limiting the present disclosure in any way. Contents not described herein are sufficiently inferable by those skilled in the art, so their description will be omitted.

[Examples and Comparative Examples]

[Example 1]

(1) Preparation of Base Steel Sheet: A slab containing 0.03 wt% of carbon (C) (300 ppm), greater than 0 wt% and 0.001 wt% or less of silicon (Si) (10 ppm), 0.31 wt% of manganese (Mn) (3100 ppm), greater than 0 wt% and 0.001 wt% or less of phosphorus (P) (10 ppm), and the balance of iron (Fe) and other unavoidable impurities was reheated, hot-rolled, and cold-rolled to prepare a base steel sheet (carbon steel cold-rolled steel sheet) with a thickness of 0.30 mm.

(2) Pre-treatment and Electro-nickel Plating: The base steel sheet was pretreated by alkaline degreasing, alkaline electrolytic degreasing, and pickling (sulfuric acid aqueous solution), and then electro-nickel plating was performed. Specifically, a plating bath was prepared containing 250 g/L of nickel sulfate (NiSO4), 40 g/L of nickel chloride ($NiCl_2$), 40 g/L of boric acid ($H_3BO_3$), and the balance of water, at a temperature of 60 °C and a pH of 3.2 to 4.5. Electroplating was performed at a current density of 10 ASD to form an electro-nickel plating layer on the upper and lower surfaces of the base steel sheet, respectively. The thickness of the electro-nickel plating layer was measured using a fluorescent X-ray measurement equipment (X-ray fluorescence analyzer, XRF), and the thickness of the electro-nickel plating layer formed on the upper and lower surfaces of the base steel sheet was 0.684 $\mu$m each.

(3) Electroless Nickel Plating: Electroless nickel plating was continuously performed on the base steel sheet with the electro-nickel plating layer formed thereon to manufacture an intermediate. Specifically, electroless nickel plating was performed using an electroless nickel plating bath containing 20 g/L of nickel sulfate ($NiSO_4$), 25 g/L of sodium hypophosphite ($Na_2HPO_3$), 35 g/L of citric acid ($C_6H_8O_7$), and the balance of water, at a temperature of 60 to 65 °C and a pH adjusted to 6.0 to 6.5 using ammonia water ($NH_4OH$) to form an electroless nickel plating layer and manufacture an intermediate. The thickness of the electroless nickel plating layer was measured using a fluorescent X-ray measurement equipment (X-ray fluorescence analyzer, XRF), and the total thickness of the nickel plating layer after electroless nickel plating, based on the surface of the base steel sheet, was 0.702 $\mu$m.

(4) Heat Treatment: The intermediate was heat-treated. The intermediate was loaded into a heat treatment furnace, and heat treatment was performed under the conditions of a heat treatment temperature of 650 °C to 730 °C and a heat treatment time of greater than 0 minutes and 10 minutes or less, in an atmosphere gas containing 95.5 vol% of nitrogen and 4.5 vol% of hydrogen based on the total volume of nitrogen ($N_2$) and hydrogen ($H_2$), and 5 ppm of oxygen ($O_2$) based on the total volume of the atmosphere gas.

(5) Temper Rolling and Slitting: The base steel sheet with the nickel-iron alloy layer formed thereon was loaded into a temper rolling mill and temper-rolled for 1 pass at a reduction rate of 1.2% to manufacture a temper-rolled material (or nickel plated steel sheet).

The nickel plated steel sheet included a base steel sheet, a nickel plating layer formed on both surfaces of the base steel sheet, and a nickel-iron (Ni-Fe) diffusion layer formed between the base steel sheet and the nickel plating layer. The nickel plating layer and the nickel-iron (Ni-Fe) diffusion layer were formed by forming an electro-nickel plating layer on the base steel sheet and an electroless nickel plating layer on at least a portion of the surface of the electro-nickel plating layer, followed by heat treatment.

[Examples 2 to 9]

Nickel plated heat-treated steel sheets were manufactured using the same method as Example 1, except for applying the conditions of electroless nickel plating time, thickness of the electro-nickel plating layer, and total thickness of the nickel plating layer after forming the electroless nickel plating layer as shown in Table 1 below.

[Comparative Examples 1 to 3]

Nickel plated heat-treated steel sheets were manufactured using the same method as Example 1, except that electroless nickel plating was not performed after forming the electro-nickel plating layer.

[Comparative Example 4]

Nickel plated heat-treated steel sheets were manufactured using the same method as Example 1, except that electro-nickel plating was not performed and electroless nickel plating was performed.

[Test Examples]

For the nickel plated steel sheets of the Examples and Comparative Examples, the composition and corrosion resistance were analyzed according to the following evaluation methods and test examples, and the results are shown in Figures 2, 3, and 4 below.

(1) Surface Co-deposited Element Content: The Ni, Fe, and P components were continuously analyzed in the depth direction from the surface of the heat-treated nickel plated steel sheet using Glow Discharge Spectrometry (GDS), and the P component content in the outermost surface of the nickel plating layer is shown in Table 1.

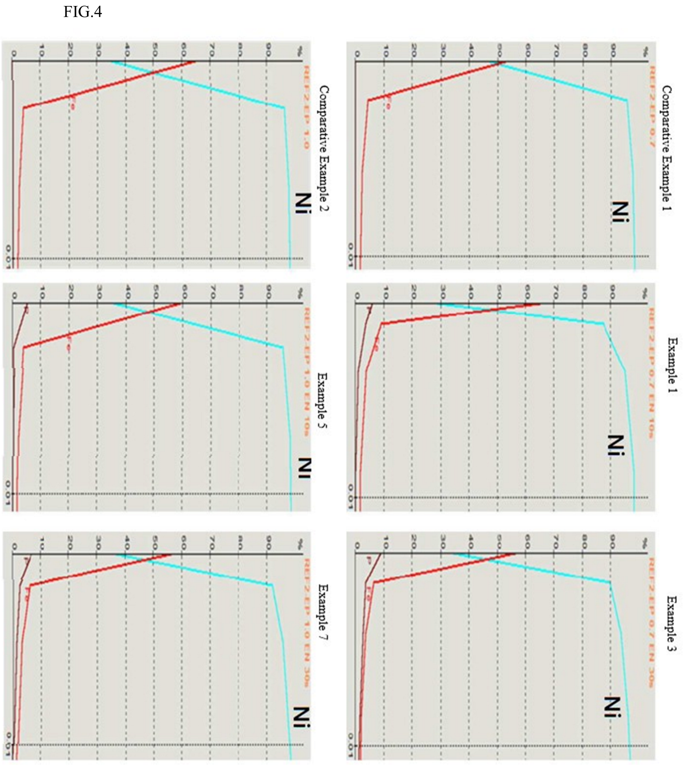

(2) Corrosion Resistance: Performed through a salt spray test. Specifically, specimens of the Examples and Comparative Examples were sheared to a size of 100 mm X 100 mm (width X length), and a 5% NaCl solution was sprayed at an air pressure of 1.5 kgf/cm² for 4 hours at a temperature of 35 °C, followed by rinsing with pure water, and the presence of rust spots was visually evaluated. The results are shown in Table 2 and Figure 4 below (S: no rust spots ≥2 mm in length, A: no rust spots ≥3 mm in length, B: fewer than 3 rust spots ≥3 mm in length, C: 3 or more and fewer than 10 rust spots ≥3 mm in length, D: 10 or more rust spots ≥3 mm in length).

(3) Surface Contact Resistance (mΩ) Measurement (1): The surface contact resistance was measured and evaluated for the Examples and Comparative Examples. Specifically, the surface contact resistance of the nickel plated steel sheet (nickel plating layer) was measured using an AC four-point probe method under the condition of a measurement current of 10 mA using a surface contact resistance tester (A.I.T Inc., Product Name: CMT-SR2000N), and the results are shown in Table 2 below.

In addition, the surface contact resistance (mΩ) ($R_1$) of the nickel plating layer was measured for the Examples and Comparative Examples. Also, for the Examples, the surface contact resistance (mΩ) ($R_0$) of the nickel plating layer of the nickel plated steel sheet heat-treated without forming an electroless nickel plating layer was measured, and the value according to Formula 1 below was calculated, with the results shown in Table 2.

$$【Formula\ 1】$$

$$|(R_1-R_0)/R_0 \text{ X } 100|$$

(In Formula 1, $R_0$ is the surface contact resistance (mΩ) of the nickel plating layer heat-treated without forming an electroless nickel plating layer, and $R_1$ is the surface contact resistance (mΩ) of the nickel plating layer formed by forming the electro-nickel plating layer and the electroless nickel plating layer, followed by heat treatment).

(4) Surface Contact Resistance (mΩ) Measurement (2): For the Examples and Comparative Examples, the surface contact resistance of the intermediate before heat treatment (surface contact resistance of the intermediate's electroless nickel plating layer) was measured using an AC four-point probe method under the condition of a measurement current of 10 mA using the same tester.

After that, the surface contact resistance (mΩ) ($R_2$) of the intermediate's electroless nickel plating layer was measured, and using the surface contact resistance (mΩ) of the nickel plating layer measured in the Surface Contact Resistance Measurement (1), the value according to Formula 2 below was calculated, with the results shown in Table 2.

$$【Formula\ 2】$$

$$|(R_1-R_2)/R_2 \text{ X } 100|$$

(In Formula 2, $R_1$ is the surface contact resistance (mΩ) of the nickel plating layer formed by forming the electro-nickel plating layer and the electroless nickel plating layer, followed by heat treatment, and $R_2$ is the surface contact resistance (mΩ) of the electroless nickel plating layer of the intermediate before heat treatment).

[Table 1]

| Category | Electro-nickel Plating Thickness (μm) | Total Thickness of Nickel Plating Layer After Electroless Nickel Plating (μm) | Electroless Plating Time (s) | Surface Co-deposited Element | Surface Co-deposited Element Content (wt%) |
|---|---|---|---|---|---|
| Example 1 | 0.684 | 0.702 | 5 | P | 5.7 |
| Example 2 | 0.696 | 0.701 | 10 | P | 7.1 |
| Example 3 | 0.710 | 0.799 | 15 | P | 9.6 |
| Example 4 | 0.699 | 0.815 | 30 | P | 11.6 |
| Example 5 | 0.994 | 0.995 | 5 | P | 4.8 |
| Example 6 | 0.990 | 1.005 | 10 | P | 5.7 |
| Example 7 | 1.012 | 1.076 | 15 | P | 6.9 |
| Example 8 | 0.981 | 1.101 | 30 | P | 9.8 |

(continued)

| Category | Electro-nickel Plating Thickness ($\mu$m) | Total Thickness of Nickel Plating Layer After Electroless Nickel Plating | Electroless Plating Time (s) | Surface Co-deposited Element | Surface Co-deposited Element Content (wt%) |
|---|---|---|---|---|---|
| | | ($\mu$m) | | | |
| Example 9 | 2.912 | 2.919 | 5 | P | 4.1 |
| Comparative Example 1 | 0.701 | - | - | - | - |
| Comparative Example 2 | 1.006 | - | - | - | - |
| Comparative Example 3 | 2.980 | - | - | - | - |
| Comparative Example 4 | - | 0.527 | 900 | P | 15.5 |

[Table 2]

| Category | Corrosion Resistance | $R_0$ (m$\Omega$) | $R_1$ (m$\Omega$) | $R_2$ (m$\Omega$) | Formula 1 Value | Formula 2 Value |
|---|---|---|---|---|---|---|
| Example 1 | B | 0.57 | 0.62 | 0.59 | 8.77 | 5.08 |
| Example 2 | B | 0.56 | 0.61 | 0.59 | 8.93 | 3.39 |
| Example 3 | B | 0.64 | 0.67 | 0.65 | 4.69 | 3.08 |
| Example 4 | B-A | 0.71 | 0.76 | 0.73 | 7.04 | 4.11 |
| Example 5 | B-A | 0.56 | 0.61 | 0.58 | 8.93 | 5.17 |
| Example 6 | A | 0.63 | 0.65 | 0.64 | 3.17 | 1.56 |
| Example 7 | A | 0.59 | 0.62 | 0.6 | 5.08 | 3.33 |
| Example 8 | S | 0.69 | 0.73 | 0.7 | 5.80 | 4.29 |
| Example 9 | S | 0.65 | 0.67 | 0.66 | 3.08 | 1.52 |
| Comparative Example 1 | D | 0.63 | 0.63 | - | 0 | - |
| Comparative Example 2 | C | 0.65 | 0.65 | - | 0 | - |
| Comparative Example 3 | A | 0.63 | 0.63 | - | 0 | - |
| Comparative Example 4 | A | 0.99 | 1.04 | 0.86 | - | 20.93 |

(In Table 2, $R_0$: Surface contact resistance (m$\Omega$) of the nickel plating layer of the nickel plated steel sheet heat-treated without forming an electroless nickel plating layer, $R_1$: Surface contact resistance (m$\Omega$) of the nickel plating layer, $R_2$: Surface contact resistance (m$\Omega$) of the electroless nickel plating layer of the intermediate).

FIG. 4 is a graph illustrating the surface co-deposited element analysis results (GDS) for Examples 1, 3, 5, 7 and Comparative Examples 1, 2. In FIG. 4, the x-axis represents the depth ($\mu$m) from the outermost surface of the nickel plating layer, and the y-axis represents wt%. Referring to the results in Table 1 and FIG. 4, it was found that Examples 1 to 7 contained phosphorus (P) as a co-deposited element on the outermost surface of the nickel plating layer, whereas Comparative Examples 1 to 3, which did not undergo electroless nickel plating, had no co-deposited element formed on the surface.

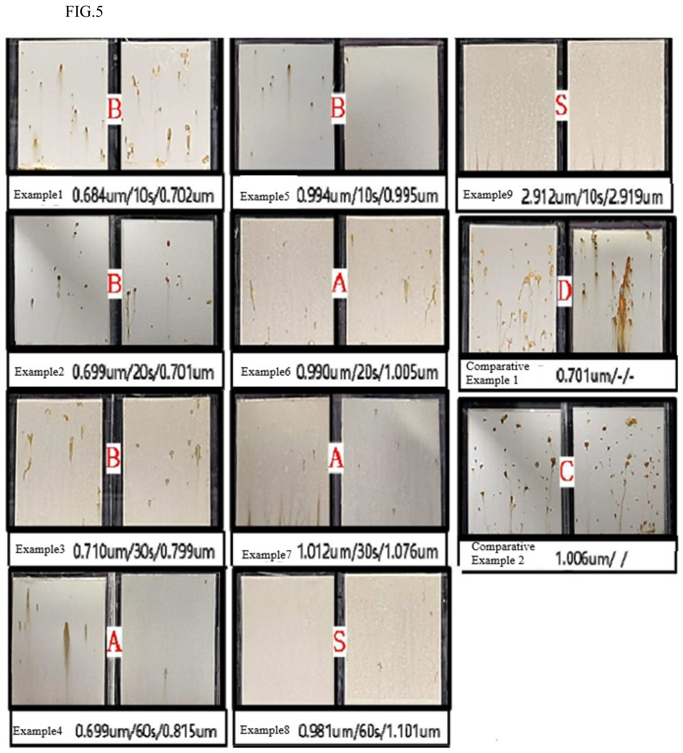

FIG. 5 is a photograph illustrating the corrosion resistance test results for Examples 1 to 9 and Comparative Examples 1 to 4. Referring to the results in Table 2 and FIG. 5, it was found that Examples 1 to 9 of the present disclosure had excellent corrosion resistance and low surface contact resistance compared to Comparative Examples 1 to 4. In the case of Comparative Example 3, despite the nickel layer thickness increasing to 2.98 $\mu$m, the corrosion resistance was similar to Example 1, and the surface contact resistance increased. Comparative Example 4, which did not form an electroplating layer, showed a significant increase in surface contact resistance compared to Examples 1 to 9. In addition, it was found that Examples 1 to 9 had excellent conductivity by minimizing the increase in surface contact resistance during the heat treatment process.

The present disclosure has been described centering on the embodiments so far. A person of ordinary skill in the art to which the present disclosure pertains will understand that the present disclosure may be implemented in modified forms without departing from the essential characteristics of the present disclosure. Therefore, the disclosed embodiments should be considered in an illustrative rather than restrictive sense. The scope of the present disclosure is shown in the appended claims rather than the foregoing description, and all differences within the equivalent scope should be interpreted as being included in the present disclosure.

[Explanation of Reference Numerals]

| 10: | Base steel sheet | 20: | Nickel plating layer |
|---|---|---|---|
| 22: | Electro-nickel plating layer | 24: | Electroless nickel plating layer |
| 30: | Nickel-iron diffusion layer | 100, 101: | Intermediate |
| 1000: | Nickel plated steel sheet | | |

**Claims**

1. A nickel plated steel sheet comprising:

   a base steel sheet;
   a nickel plating layer formed on one or more surfaces of the base steel sheet; and
   a nickel-iron (Ni-Fe) diffusion layer formed between the base steel sheet and the nickel plating layer; wherein,
   the nickel plating layer and the nickel-iron (Ni-Fe) diffusion layer are formed by forming an electro-nickel plating layer on the base steel sheet and an electroless nickel plating layer on at least a portion of the surface of the electro-nickel plating layer, followed by heat treatment,
   the electroless nickel plating layer fills defect areas formed on the electro-nickel plating layer,
   the electro-nickel plating layer has a thickness of 0.5 to 6.0 $\mu$m, and the thickness of the electroless nickel plating layer, based on the upper surface of the electro-nickel plating layer, is 0 to 0.5 $\mu$m,
   the nickel plating layer includes one or more co-deposited elements selected from phosphorus (P), boron (B), tungsten (W), cobalt (Co), molybdenum (Mo), and copper (Cu) on its surface,
   the nickel plating layer has a surface contact resistance of 1.0 m$\Omega$ or less, and
   the nickel plated steel sheet satisfies the condition of Formula 1.

$$【\text{Formula 1}】$$

$$|(R_1 - R_0)/R_0 \times 100| \leq 10$$

   (In Formula 1, $R_0$ is the surface contact resistance (m$\Omega$) of the nickel plating layer heat-treated without forming an electroless nickel plating layer, and $R_1$ is the surface contact resistance (m$\Omega$) of the nickel plating layer formed by forming the electro-nickel plating layer and the electroless nickel plating layer, followed by heat treatment).

2. The nickel plated steel sheet of claim 1, wherein the co-deposited element is included in the nickel plating layer at 1 to 20 wt%.

3. A method for manufacturing a nickel plated steel sheet, comprising:

   forming an electro-nickel plating layer on one or more surfaces of a base steel sheet; forming an electroless nickel plating layer on at least a portion of the surface of the electro-nickel plating layer to manufacture an intermediate; and
   heat-treating the intermediate; wherein,
   the intermediate includes a base steel sheet, an electro-nickel plating layer formed on one or more surfaces of the base steel sheet, and an electroless nickel plating layer formed on at least a portion of the surface of the electro-nickel plating layer,
   the electroless nickel plating layer fills defect areas formed on the electro-nickel plating layer,

the electro-nickel plating layer has a thickness of 0.5 to 6.0 $\mu$m, and the thickness of the electroless nickel plating layer, based on the upper surface of the electro-nickel plating layer, is 0 to 0.5 $\mu$m,

the nickel plated steel sheet includes a base steel sheet, a nickel plating layer formed on one or more surfaces of the base steel sheet, and a nickel-iron (Ni-Fe) diffusion layer formed between the base steel sheet and the nickel plating layer,

the nickel plating layer and the nickel-iron (Ni-Fe) diffusion layer are formed by heat-treating the intermediate,

the nickel plating layer includes one or more co-deposited elements selected from phosphorus (P), boron (B), tungsten (W), cobalt (Co), molybdenum (Mo), and copper (Cu) on its surface,

the nickel plating layer has a surface contact resistance of 1.0 m$\Omega$ or less, and

the nickel plated steel sheet satisfies the condition of Formula 1.

【Formula 1】

$$|(R_1-R_0)/R_0 \times 100| \leq 10$$

(In Formula 1, $R_0$ is the surface contact resistance (m$\Omega$) of the nickel plating layer heat-treated without forming an electroless nickel plating layer, and $R_1$ is the surface contact resistance (m$\Omega$) of the nickel plating layer formed by forming the electro-nickel plating layer and the electroless nickel plating layer, followed by heat treatment).

4. The method for manufacturing a nickel plated steel sheet of claim 3, wherein,

the electroless nickel plating layer is formed by electroless plating using an electroless nickel plating solution containing 0.05 to 1.0 mol/L of a nickel salt, 0.2 to 10.0 mol/L of a reducing agent, and 0.05 to 1.0 mol/L of a complexing agent, and

the complexing agent includes one or more selected from citric acid, succinic acid, formic acid, malic acid, and tartaric acid.

5. The method for manufacturing a nickel plated steel sheet of claim 3, wherein,

the heat treatment is performed at 650 to 730 °C in an atmosphere gas including nitrogen (N$_2$) and hydrogen (H$_2$), and

the nickel plated steel sheet manufactured by the heat treatment satisfies the condition of Formula 2.

【Formula 2】

$$|(R_1-R_2)/R_2 \times 100| \leq 10$$

(In Formula 2, $R_1$ is the surface contact resistance (m$\Omega$) of the nickel plating layer formed by forming the electro-nickel plating layer and the electroless nickel plating layer, followed by heat treatment, and $R_2$ is the surface contact resistance (m$\Omega$) of the electroless nickel plating layer of the intermediate before heat treatment).

FIG.1

1000

FIG.2

100

FIG.3

101

FIG.4

FIG.5

Europäisches
Patentamt

European
Patent Office

Office européen
des brevets

## EUROPEAN SEARCH REPORT

**Application Number**

EP 25 21 8648

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/017515 A1 (TAKAHASHI TAKEHIRO [JP] ET AL) 16 January 2014 (2014-01-16) * paragraphs [0034], [0039] - [0041], [0069], [0070], [0082] - [0090]; tables 2-4 * | 1-5 | INV.<br>C23C18/16<br>C23C18/34<br>C23C18/50<br>C25D5/50<br>C25D7/00<br>C25D7/06 |
| A | JP 2022 172933 A (FDK CORP) 17 November 2022 (2022-11-17) * the whole document * | 1-5 | |
| A | JP H07 300695 A (TOYO KOHAN CO LTD) 14 November 1995 (1995-11-14) * the whole document * | 1-5 | |

**TECHNICAL FIELDS SEARCHED (IPC)**

C23C
C25D
H01M

The present search report has been drawn up for all claims

| Place of search | Date of completion of the search | Examiner |
|---|---|---|
| The Hague | 13 April 2026 | Suárez Ramón, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 8648

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2026

| Patent document cited in search report | Publication date | Patent family member(s) | Publication date |
|---|---|---|---|
| US 2014017515 A1 | 16-01-2014 | CN 103476971 A | 25-12-2013 |
| | | JP 5447734 B2 | 19-03-2014 |
| | | JP WO2012137823 A1 | 28-07-2014 |
| | | KR 20130126725 A | 20-11-2013 |
| | | TW 201245503 A | 16-11-2012 |
| | | US 2014017515 A1 | 16-01-2014 |
| | | WO 2012137823 A1 | 11-10-2012 |
| JP 2022172933 A | 17-11-2022 | NONE | |
| JP H07300695 A | 14-11-1995 | JP 3272866 B2 | 08-04-2002 |
| | | JP H07300695 A | 14-11-1995 |

For more details about this annex : see Official Journal of the European Patent Office, No. 12/82

**EP 4 756 074 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240171333

- JP 4698205 B